# EUROPÄISCHE PATENTSCHRIFT

(11) **EP 0 875 608 B1**
(45) Veröffentlichungstag und Bekanntmachung des Hinweises auf die Patenterteilung: **21.11.2001**
(21) Anmeldenummer: 98105710.2
(22) Anmeldetag: 28.03.1998
(51) Int. Cl.: D01F 6/86, B65G 15/34, B65G 23/10, B65G 45/10

(54) **Fördergurt für Transportbänder enthaltend elastische Garne, Verwendung, Verfahren zum Transportieren von Gütern und Vorrichtung**
Conveyor belt for transport belts having elastic yarns, use, method for transporting goods and device
Courroie du convoyeur pour bandes transporteuses ayant fils élastiques, utilisation, procédé pour transporter des marchandises et dispositif

(30) Priorität: 01.04.1997 DE 19713428
(43) Veröffentlichungstag der Anmeldung: 04.11.1998
(73) Patentinhaber: TEIJIN MONOFILAMENT GERMANY GMBH, 86399 Bobingen (DE)
(72) Erfinder: Striegl, Peter, 86399 Bobingen (DE); Sohn, Achim, 86399 Bobingen (DE)
(74) Vertreter: Luderschmidt, Schüler & Partner GbR

(56) Entgegenhaltungen:
- EP-A- 0 379 967
- EP-A- 0 549 917
- JP-A- 53 111 979
- US-A- 3 880 976

## Beschreibung

Fördergurt für Transportbänder enthaltend elastische Garne, Verwendung, Verfahren zum Transportieren von Gütern und Vorrichtung

Die vorliegende Erfindung betrifft Fördergurte für Transportbänder enthaltend ein textiles Flächengebilde auf Basis von überwiegend synthetischen Garnen, die Verwendung eines Fördergurtes in Transportsystemen, vorzugsweise in Förderbändern in der Lebensmittelindustrie, im Bergbau oder in der Farbenindustrie, ein Verfahren zum Transportieren von Gütern mittels eines sich bewegenden Fördergurtes und eine Transportvorrichtung umfassend Führungselemente die einen Fördergurt bewegen.

Transportbänder werden im Bergbau, in der Schwer- und Leichtmittelindustrie, im Maschinen- und Anlagenbau, in der Lebensmittelindustrie, im Verkehrswesen, bei Behörden und Banken, in Büros, sowie in vielen anderen Bereichen eingesetzt, um mit deren Hilfe die zu befördernden Güter über größere Entfernungen und/oder Höhenunterschiede kostengünstig zu Transportieren. Fördergurte haben im allgemeinen die Form von endlosen Bändern und verlaufen über an Gestellen angebrachten drehbaren Rollen.

Aus "Technische Information, Herstellung von Transportbändern aus ® TREVIRA HOCHFEST" der Fa. Hoechst AG sind Fördergurte für Transportbänder bekannt, die als Festigkeitsträger Gewebe aus Polyester, Baumwolle, Nylon 6.6, Stahl, Reyon, Zellwolle oder Stahl enthalten. Diese Gewebe sind mit PVC, Gummi, Polyurethan, Kautschuk oder Fluorpolymeren beschichtet. Die enthaltenen Garne weisen eine hohe Festigkeit und eine geringe Höchstzugkraftehnung von nicht mehr als 22% auf, so daß sich in einem daraus hergestellten Fördergurt geringe Betriebsdehnungen von nur 1 bis 2 % einstellen.

Aus "Conveyor Belt Technology", Volume I/86, 1987, Trans Tech Publications, Bundesrepublik Deutschland, sind Verfahren zur Reinigung von Transportbändern bekannt. Beschrieben werden Einrichtungen zum Drehen des Fördergurtes, Einrichtungen zum Waschen, Besprühen, Anblasen mit Luft und Absaugen. Desweiteren sind Vorrichtungen zum Klopfen, Bürsten, Wischen und Schaben mittels Abstreifelementen beschrieben.

Elastische Gewebe für Papiermaschinen sind aus der EP-A-0 379 967, US 5,225,270, EP-B1-0 446 355 und der EP-A-0 549 917 bekannt. Diese Gewebe enthalten elastische Monofilamente und werden in Form von endlosen Bändern hergestellt. Die Gewebe sind im allgemeinen mehrlagig aufgebaut, wobei die obere, Schicht ein Nadelfilz ist.
Das in der EP 0 549 917 beschriebene mehrlagiges Gewebe für Transportbänder in Papiermaschinen weist ein Stützgewebe auf, welches thermoplastische elastomere Copolyether-ester Monofile aus ®RITEFLEX der Fa. Hoechst Celanese Corp., USA enthalten kann. Das Stützgewebe ist, wenn es im Querschnitt betrachtet wird, so gebunden, daß auf der oberen Seite des Gewebes die doppelte Anzahl Schußfäden wie auf der unteren Seite des Gewebes zu liegen kommt. Gemäß den Angaben in dieser Druckschrift können die beschriebenen Gewebe gegebenfalls elastische Fäden in Maschinenrichtung aufweisen. Über die Anordnung beziehungsweise Orientierung der elastischen Fäden in Bezug auf die Laufrichtung des Transportbandes sind keine Information enthalten.
Die EP-A-0 379 967 beschreibt Monofile aus einem thermoplastischen elastomeren Polyether-ester, welches als Elastomerkomponente mindestens 5 Gew.-% Polyurethan enthält, und deren Verwendung in Textilien für Förder- und Trockenbänder und Stützgeweben von Nadelfilzen.
Die US 5,225,270 beschreibt einen Nadelfilz für Papiermaschinen, welcher aus elastischen Monofilen mit einem Anteil von unter anderem mindestens 30 Gew.-% Polyphenylen-ether und mindestens 30 Gew.-% Polyamid besteht.

Die EP-B1-0 446 355 beschreibt ebenfalls Stützgewebe für Papiermaschinen-Nadelfilze aus elastischen Monofilen. Die verwendeten Monofile bestehen aus einem elastomeren Block-Copolymer mit Hartsegmenten aus Polyamiden und Weichsegmenten aus Polyethern. Um die Dimensionsstabilität zu erhöhen, wird vorgeschlagen, daß die elastischen Monofile nur in Richtung der Breite des Stützgewebes verwendet werden.

Es bestand somit immer noch die Aufgabe, einen Fördergurt zu entwickeln, der eine ausreichende Dehnbarkeit in Laufrichtung des Bandes besitzt und der zum Transportieren von Gütern mit einer Reinigungszone gemäß dem Verfahren der Erfindung geeignet ist.

Die vorliegende Erfindung betrifft einen Fördergurt (5) für Transportbänder enthaltend ein textiles Flächengebilde auf Basis von überwiegend synthetischen Garnen, der dadurch gekennzeichnet ist, daß der Fördergurt die Form eines endlosen Bandes hat, die in Richtung der Laufrichtung des Fördergurtes verlaufenden Garne elastisch sind, wobei die elastischen Garne eine Höchstzugkraftdehnung von mindestens 60 % aufweisen und zu mindestens zu 70 Gew.-%, bezogen auf das Gesamtgewicht des Garns, aus einem thermoplastischen, elastomeren Copolyether-esters bestehen, der die ' wiederkehrenden Struktureinheiten der Formeln I und II

-O-OC-Ar²-CO-O-R⁴- (I),

und

-O-OC-Ar³-CO-O-R⁵- (II),

enthält, worin
Ar² und Ar³ unabhängig voneinander zweiwertige aromatische Reste darstellen,
- R⁴: einen zweiwertigen aliphatischen oder cycloaliphatischen Rest darstellt, und
- R⁵: den zweiwertigen Rest eines Polyalkylenethers bedeutet.

Die Fördergurte können ein oder mehrlagig aufgebaut sein. So ist es zum Beispiel möglich, daß neben dem textilen Flächengebilde noch weitere nicht textile Lagen, wie beispielsweise Gummischichten oder Beschichtungen vorhanden sind. Für bestimmte Anwendungen in der Lebensmittelindustrie kann es zweckmäßig sein, daß der Fördergurt vorzugsweise aus einer oberen und einer unteren Lage eines textilen Flächengebildes besteht und sich in der Mitte zwischen diesen beiden Lagen eine weitere Schicht aus Gummi oder Kunststoff befindet. Besonders bevorzugt sind Fördergurte, die nur eine Lage eines textilen Flächengebildes enthalten.

Vorzugsweise sind die Fördergurte unbeschichtet. Diese sogenannten Leichtförderbänder weisen bis auf gegebenfalls vorhandene allgemein für die für Ausrüstung von Garnen übliche Beaufschlagungen, wie beispielsweise Schlichten oder Avivagen, keine zusätzlichen Beschichtungen oder weiteren Überzüge, wie beispielsweise eine Gummi-, Latex- oder PVC-matrix, auf.

Die textilen Flächengebilde, die in den erfindungsgemäßen Fördergurten enthalten sind, sind vorzugsweise Gewebe, Gewirke, Vliese, Gelege oder Spiraltücher. Besonders bevorzugt werden die textilen Flächengebilde in Form von Geweben eingesetzt.

Der Begriff "Garn" ist im Rahmen der vorliegenden Beschreibung unter seiner breitest vorstellbaren Bedeutung zu verstehen. Unter den Begriff fallen beispielsweise Monofilamente, Multifilamentgarne, Stapelfasergarne und Bikomponentengarne oder aber auch Mischungen dieser Garne.

Bevorzugt sind zumindest die Garne, die in Laufrichtung des Fördergurtes verlaufen, Monofilamentgarne, also sogenannte Monofile. Besonders bevorzugt werden in den erfindungsgemäßen Fördergurten textile Flächengebilde eingesetzt, die vollständig aus Monofilamenten hergestellt sind.

Im Rahmen der vorliegenden Beschreibung wird unter einem in Laufrichtung des Fördergurtes verlaufenden Garn ein Garn verstanden, welches über eine größere Garnlänge hinweg betrachtet praktisch parallel zur Laufrichtung des Fördergurtes verläuft. Ein solches Garn verläuft im allgemeinen nicht völlig exakt entlang einer geraden Linie, sondern kann durchaus in kleineren Teilbereichen ein wenig von der theoretischen Richtung abweichen. Eine derartige Abweichung kann sich beispielsweise beim Weben ergeben oder ganz allgemein durch kleinere Ungenauigkeiten bei der Herstellung des Fördergurtes.

Unter einem "thermoplastischen, elastomeren Copolyether-ester" ist im Rahmen dieser Beschreibung ein Polymer zu verstehen, dessen Glasübergangstemperatur weniger als 23°C, vorzugsweise weniger als 0°C beträgt.

Vorzugsweise enthält der thermoplastische, elastomere Copolyether-ester zu mindestens 80 Gew.-%, insbesondere zu mindestens 95 Gew.-%, bezogen auf das Gesamtgewicht des thermoplastischen, elastomeren Copolyether-esters, die wiederkehrenden Struktureinheiten der Formeln I und II. Ganz, besonders bevorzugt sind thermoplastische, elastomere Copolyether-ester, die zu mindestens 98 Gew.-% diese Struktureinheiten enthalten.

Vorzugsweise bedeuten Ar² und Ar³ unabhängig voneinander einen Phenylen- und/oder einen Naphthylenrest.

Besonders bevorzugt bedeuten Ar² und Ar³ jeweils 1,4-Phenylen.

R⁴ als zweiwertiger aliphatischer Rest bedeutet geradkettiges oder verzweigtes Alkylen oder Alkyliden; dabei handelt es sich üblicherweise um Reste mit zwei bis zwanzig Kohlenstoffatomen, bevorzugt zwei bis acht Kohlenstoffatomen und insbesondere zwei bis vier Kohlenstoffatomen.

Besonders bevorzugt ist R⁴ geradkettiges Alkylen mit zwei bis sechs Kohlenstoffatomen, insbesondere Ethylen.

R⁴ als zweiwertiger cycloaliphatischer Rest bedeutet üblicherweise einen Rest enthaltend fünf bis acht, vorzugsweise sechs Ringkohlenstoffatome; besonders bevorzugt ist dieser Carbocyclus Teil einer aliphatischen Kette. Ein Beispiel für einen besonders bevorzugten Vertreter dieses Typs ist der Rest des Cyclohexandimethanols.

Besonders bevorzugt ist R⁴ ein Rest der Formel -CₙH₂ₙ-, worin n eine ganze Zahl zwischen 2 und 6 ist oder ein von Cyclohexandimethanol abgeleiteter Rest.

R⁵ als zweiwertiger Rest eines Polyoxyalkylens bedeutet üblicherweise einen Polyetherrest, der wiederkehrende Oxyethylen-, Oxypropylen- oder insbesondere Oxybutyleneinheiten oder Mischungen dieser Einheiten aufweist.

Besonders bevorzugt stellt R⁵ einen Rest der Formel III dar

-[CₒH₂ₒ-O]_{z}-CₒH₂ₒ- (III),

worin o eine ganze Zahl von zwei bis vier bedeutet und z eine ganze Zahl von 1 bis 50 ist.

Ganz besonders bevorzugt bedeutet o vier und z ist eine ganze Zahl von 10 bis 18.

Besonders bevorzugt kommen thermoplastische und elastomere Copolyether-ester enthaltend die oben definierten wiederkehrenden Struktureinheiten der Formeln I und II zum Einsatz, worin Ar² und Ar³ 1,4-Phenylen bedeuten, R⁴ Ethylen ist, R⁵ eine Gruppe der oben definierten Formel III ist, o vier bedeutet, und worin der Anteil der wiederkehrenden Struktureinheiten der Formel III, bezogen auf den Anteil des Polyestermoleküls 5 bis 60 Gew.-% beträgt.

Garne, die aus derartigen thermoplastischen elastomeren Copolyether-estern bestehen, besitzen in Abhängigkeit vom Anteil der wiederkehrenden Struktureinheiten der Formel III unterschiedliche Schmelzpunkte; je höher der Anteil dieser Struktureinheiten ist, umso niedriger läßt sich der Schmelzpunkt einstellen. So weisen beispielsweise Garne aus einem thermoplastischen und elastomeren Copolyether-ester dieses Typs mit einem Gehalt von 13 Gew.-% Poly-oxybutylen einen Schmelzpunkt von etwa 220°C auf, während Garne aus einem thermoplastischen und elastomeren Copolyether-ester dieses Typs mit einem Gehalt von 53 Gew.-% Poly-oxybutylen einen Schmelzpunkt von etwa 160°C aufweisen.

Bedeuten in den oben definierten Strukturformeln irgendwelche Reste zweiwertige aliphatische Reste, so ist darunter verzweigtes und insbesondere geradkettiges Alkylen zu verstehen, beispielsweise Alkylen mit zwei bis zwanzig, vorzugsweise mit zwei bis acht Kohlenstoffatomen. Beispiele für derartige Reste sind Ethan-1,2-diyl, Propan-1,3-diyl, Butan-1,4-diyl, Pentan-1,5-diyl, Hexan-1,6-diyl oder Octan-1,8-diyl.

Bedeuten in den oben definierten Strukturformeln irgendwelche Reste zweiwertige cycloaliphatische Reste, so sind darunter Gruppen zu verstehen, die carbocyclische Reste mit fünf bis acht, vorzugsweise sechs Ringkohlenstoffatomen enthalten. Beispiele für derartige Reste sind Cyclohexan-1,4-diyl oder die Gruppe -CH₂-C₆H₁₀-CH₂-.

Bedeuten in den oben definierten Strukturformeln irgendwelche Reste zweiwertige aromatische Reste, so handelt es sich dabei um ein- oder mehrkernige aromatische Kohlenwasserstoffreste oder um heterocyclischaromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie -O-, -S-, -CO- oder -CO'-NH- Gruppen miteinander verbunden sein.

Die Valenzbindungen der zweiwertigen aromatischen Reste können sich in para- oder in vergleichbarer koaxialer oder paralleler Position zueinander befinden, oder auch in meta- oder in vergleichbarer gewinkelter Position zueinander.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphen-4,4'-diyl Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Bedeuten irgendwelche Reste zweiwertige araliphatische Reste, so sind darunter Gruppen zu verstehen, die einen oder mehrere zweiwertige aromatische Reste enthalten, welche über eine oder beide Valenzen mit einem Alkylenrest kombiniert sind. Ein bevorzugtes Beispiel für einen derartigen Rest ist die Gruppe -C₆H₄-CH₂-.

Bei den wiederkehrenden Struktureinheiten der Formel I bzw. II handelt es sich um typische Hart- bzw. Weichsegmente. Thermoplastische Polyester dieses Typs sind bekannt und beispielsweise in Domininghaus: "Die Kunststoffe und ihre Eigenschaften", 3. Auflage, VDI Verlag GmbH, Düsseldorf 1988, S. 518-524 beschrieben.

Alle diese aliphatischen, cycloaliphatischen, aromatischen, araliphatischen oder Polyoxyalkylenreste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Die in den erfindungsgemäßen Fördergurten enthaltenen elastischen Garne bestehen vorzugsweise zu mindestens 70 Gew.-%, insbesondere zu mindestens 95 Gew.-% aus dem vorstehend beschriebenen thermoplastischen elastomeren Copolyether-ester. Ganz besonders bevorzugt sind Garne, die ganz aus dem vorstehend beschriebenen thermoplastischen elastomeren Copolyether-ester bestehen.

Die elastischen Garne können neben dem thermoplastischen, elastomeren Copolyether-ester noch bis zu einer Menge von 30 Gew.-% von elastomeren oder nicht elastomeren spinnbaren Polymeren enthalten, die von den vorstehend beschriebenen thermoplastischen, elastomeren Copolyether-estern verschieden sind. Diese können beispielsweise elastomere oder nicht elastomere spinnbare Polymere auf Basis von Polyestern, Polyamiden oder Polyurethanen oder Polyolefinen sein.

Im thermoplastischen elastomeren Copolyether-ester können noch andere Block-Copolymere enthalten, wie beispielsweise geringe Mengen von Copolymeren auf Basis von nichtelastomeren oder elastomeren Polyamiden oder Polyurethan. Vorzugsweise beträgt der Anteil des Polyurethans weniger als 5 Gew.-%, insbesondere weniger als 2 Gew.-%, bezogen auf die Gesamtmenge des thermoplastischen elastomeren Copolyether-esters. Ganz besonders bevorzugt sind thermoplastische, elastomere Copolyether-ester, die ausschließlich aus Blockpolymeren auf Polyesterbasis bestehen.

Ein Beispiel für einen handelsüblichen thermoplastischen elastomeren Copolyether-ester, der sich für die Herstellung der elastischen Garne, vorzugsweise der elastischen Monofilamente, in den erfindungsgemäßen Transportbändern eignet, ist das unter der Bezeichnung ® RITEFLEX von der Fa. Hoechst Celanese Corp. erhältliche Produkt.

Die elastischen Garne können außer dem oben beschriebenen Copolyester noch geringe Mengen von Beimengungen und Additiven nicht polymerer Natur enthalten, wie z. B. Katalysatorrückstände, Modifizierungszusätze, Füllmittel, Mattierungsmittel, Pigmente, Farbstoffe, Stabilisatoren, wie UV-Absorber, Antioxydantien, Hydrolyse-, Licht- und Temperatur-Stabilisatoren und/oder Verarbeitungshilfsmittel, Weichmacher oder Gleitmittel. Vorzugsweise sind diese Additive in einer Konzentration von 0,01 - 5 Gew.-%, insbesondere 0,1 - 2 Gew.-% vorhanden. Bei den Katalysatorrückständen kann es sich beispielsweise um Antimontrioxid oder Tetraalkoxytitanate handeln. Als Verarbeitungshilfsmittel oder Gleitmittel können Siloxane, insbesondere polymere Dialkyl- oder Diarylsiloxane, Salze und Wachse sowie längerkettige organische Carbonsäuren, das sind solche mit mehr als 6 Kohlenstoffatomen, aliphatische, aromatische und/oder perfluorierte Ester und Ether in Mengen bis 1 Gew.-% eingesetzt werden. Die elastischen Garne können auch anorganische oder organische Pigmente oder Mattierungsmittel enthalten, wie z. B. organische Farbstoffpigmente oder Titandioxid, oder Ruß als Farb- oder Leitfähigkeitszusatz. Als Stabilisatoren werden beispielsweise Phosphorverbindungen, wie z. B. Phosphorsäureester, eingesetzt und darüber hinaus können, sofern erforderlich, auch Viskositätsmodifizierer und Stoffe zur Modifizierung des Kristallitschmelzpunkts bzw. der Glasübergangstemperatur oder solche, die die Kristallisationskinetik, bzw. den Kristallisationsgrad beeinflussen, eingesetzt werden. Als Viskositätsmodifzierer werden beispielsweise mehrwertige Carbonsäuren oder deren Ester, wie Trimesin- oder Trimellitsäure, oder mehrwertige Alkohole, wie z. B. Diethylenglykol, Triethylenglykol, Glycerin oder Pentaerytrit eingesetzt. Diese Verbindungen werden entweder den fertigen Polymeren in geringer Menge beigemischt oder, vorzugsweise, als Copolymerisationsbestandteile bei der Herstellung der Polymeren in gewünschter Menge hinzugegeben.

Die im erfindungsgemäßen Fördergurt eingesetzten elastischen Garne Weisen vorzugsweise eine Knotenfestigkeit von mind. 8 cN/tex, insbesondere 12 cN/tex, auf.

Vorzugsweise weisen die elastischen Garne eine Höchstzugkraftdehnung zwischen 65 und 110 % auf. Besonders bevorzugt sind elastische Garne, die eine Höchstzugkraftdehnung von 70 bis 90 %, insbesondere 75 bis 85 %, aufweisen.

Die Festigkeit und die Höchstzugkraftdehnung wurde nach DIN ISO 2062 (1995) bestimmt.

Die Knotenfestigkeit (Knotenzugversuch) wurde nach DIN 53842 Teil 1 bestimmt, wobei abweichend von der Norm bei der Prüfung der Festigkeit immer Knoten mit Drehrichtung Z erzeugt wurden.

Der erfindungsgemäße Fördergurt weist eine überraschend hohe Beständigkeit gegenüber Verschleiß auf. Wenn der Fördergurt gemäß dem Verfahren der Erfindung eingesetzt wird, muß dieser eine große Anzahl von Streck- und Kompressionszyklen überstehen.
Während eines Streck- oder Kompressionszyklusses wird das textile Flächengebilde im Fördergurt um einen bestimmten Betrag gedehnt und wieder entspannt. Der Fördergurt gemäß der Erfindung behält auch nach vielen Beanspruchungszyklen seine ursprüngliche Formstabilität bei. Eine geeignete Meßmethode zur Charakterisierung dieser Eigenschaft stellt die sogenannte Dimensionsdauerbeständigkeit dar. Die Dimensionsdauerbeständigkeit ist in Anlehnung an die in der DIN 53835 Teil 2 beschriebene Zugbeanspruchungskennzahl Cₙ definiert.

### Bestimmung der Dimensionsdauerstabilität:

Die Dimensionsdauerstabilität wurde bestimmt in weitgehender Übereinstimmung mit dem Hysteresezugversuchs nach DIN 53835 Teil 2.
Beim Hysteresezugversuch wird ein elastisches Garn in einer Zugprüfmaschine (Typ: UPM Zwick 1455) zwischen zwei Klemmen eingespannt. Durch Bewegung der Klemmen wird eine Zugbeanspruchung auf dieses Garn aufgebracht, wobei sich die Klemmen zwischen einer oberen und unteren Dehnungsgrenze bewegen. Dabei wird die Probe durch Klemmenbewegung zwischen den Dehnungsgrenzen ohne Pause an den Umkehrpunkten zügig mit einer vorgegebenen Klemmengeschwindigkeit beansprucht. Dabei werden die Zugkraft-Längenänderungskurven aufgezeichnet. Die Zugbeanspruchungskennzahl Cₙ in jedem Dehnungsspiel (n = Anzahl der Dehungsspiele) ergibt sich aus dem Verhältnis der Zugkraft bei der halben Gesamtdehnung bei Belastung und der Zugkraft bei der Gesamtdehnung. Aufgrund der Beschaffenheit der elastischen Monofile mußte die DIN 53835 Teil 2, wiefolgt abgewandelt werden:
Anzahl der Dehnungsspiele: 100
Untere Dehnungsgrenze: 5%
Obere Dehnungsgrenze: 10%.
Vorspannkraft (Kraft, bei der die Probe in die Prüfmaschine eingespannt wird): 0,25 cN/tex
Freie Einspannlänge: 500 mm
Klemmengeschwindigkeit: 500 mm/min
Anzahl der Messungen für Mittelwert: 10

Der vorstehend beschriebene Bestimmung der Dimensionsdauerstabilität kann an trockenen Garnen in Normalklima oder, was beim Einsatz des Fördergurtes bei feuchten klimatischen Bedingungen wichtig wird, auch an naßen Garnen durchgeführt werden. Zur Bestimmung der Dimensionsdauerstabilität mit naßen Garnen werden die Proben vor der Prüfung mindestens 24 Stunden in Leitungswasser bei Raumtemperatur gelagert. Die Meßproben werden einzeln entnommen und nach höchstens 60 s geprüft.

Die elastischen Garne weisen vorzugsweise eine Dimensionsdauerbeständigkeit C₁₀₀ vom mehr als 0,60 auf. Besonders bevorzugt liegt der Wert für die Dimensionsdauerbeständigkeit C₁₀₀ höher als 0,65, insbesondere in einem Bereich von 0,67 bis 0,8.

Vorzugsweise weisen die elastischen Garne einen Erweichungspunkt zwischen etwa 110 und 200°C auf. Der Schmelzpunkt liegt vorzugsweise zwischen etwa 150 und 235°C, insbesondere zwischen etwa 190 und 210°C.

Die Festigkeit der elastischen Garne beträgt vorzugsweise mindestens 12 cN/tex. Besonders bevorzugt sind elastische Garne mit einer Festigkeit von mindestens 17 cN/tex, insbesondere mindestens 20 cN/tex.

Die vorstehend beschriebenen elastischen Garne weisen vorzugsweise einen Thermoschrumpf bei einer Temperatur von 180°C auf, der oberhalb des Thermoschrumpfs von Polyethylenterephthalat bei dieser Temperatur liegt. Im allgemeinen liegen die Werte für den Thermoschrumpf bei 180°C unter 50 %, insbesondere unter 30 %. Besonders bevorzugt sind Garne, die einen Thermoschrumpf im Bereich von 20 bis 25 % aufweisen.

Als senkrecht zur Laufrichtung des Fördergurtes verlaufende Garne kommen Garne zum Einsatz, die synthetische organische Fasern auf Basis von Polyamiden, Polyestern, Polyolefinen oder Polyurethanen oder inorganischen Fasern, wie beispielsweise Glasfasern oder Kohlefasern oder auch Mischungen dieser Faserarten enthalten. Die Garne können glatt, gekräuselt oder ' spiralförmig verarbeitet werden.

Vorzugsweise sind die senkrecht zur Laufrichtung des Fördergurtes verlaufenden Garne nicht elastische synthetische Garne auf Basis von nicht elastomeren Polyestern, Polyamiden oder Polyolefinen, die eine Höchstzugkraftdehnung von weniger als 60% aufweisen.

Besonders bevorzugt sind die nicht elastischen Garne Monofilamente aus nicht elastischen Synthesefasern auf Basis von unmodifizierten oder auch modifizierten Polyestern. Beispielsweise können die nicht elastischen Garne Polyethylenterephthalatmonofilamente sein, wie etwa ® TREVIRA Monofil der Fa. Hoechst Trevira GmbH & Co KG.

In einer weiteren besonders vorteilhaften Ausführungsform enthalten die nicht elastischen Garne schmutzabweisend modifizierte Polyester, wie insbesondere Polyethylenterephtalat mit einem Zusatz von bis zu 20 Gew.-%, vorzugsweise 15 Gew.-% Polytetrafluorethylen oder Polyvinylidenfluorid. Ein Beispiel für ein erfindungsgemäßes schmutzabweisendes Garn ist das Polyester Monofil ®Easy Kleen der Fa. Hoechst Trevira GmbH & Co KG.

Besonders bevorzugt weisen die senkrecht zur Laufrichtung des Fördergurtes verlaufenden Garne eine Höchstzugkraftdehnung von weniger als 25 % auf, insbesondere weniger als 20 %.

Die Garne, die im erfindungsgemäßen Fördergurt zum Einsatz kommen, weisen vorzugsweise einen Durchmesser zwischen 10 und 1500 *µ*m auf. Besonders bevorzugt liegt der Durchmesser im Bereich von 100 bis 800 *µ*m. Der Titer liegt vorzugsweise in einem Bereich von etwa 1 bis 24400 dtex, insbesondere 300 bis 2000 dtex.

Der Durchmesser der einsetzbaren Garne schwankt nur wenig. Vorzugsweise betragen die Schwankungen bezogen auf den mittleren Durchmesser des Garns nur etwa ±5 %, insbesondere nur ±3 %. Besonders bevorzugt sind Garne, die einen sehr gering schwankenden Durchmesser um ± 1 % aufweisen.

Die textilen Flächengebilde in den erfindungsgemäßen Fördergurten sind so angeordnet, daß die vorstehend beschriebenen elastischen Garne in Richtung der Laufrichtung des Fördergurtes verlaufen. Das heißt, daß die textilen Flächengebilde in Laufrichtung überwiegend, das heißt zu mindestens 65 Gew.-%, aus den oben beschriebenen elastischen Garnen bestehen. Besonders bevorzugt sind Fördergurte, die zu mindestens 90 Gew.%, insbesondere zu mindestens 98 Gew.%, die vorstehend beschriebenen elastische Garne in Laufrichtung enthalten.

Das textile Flächengebilde, welches im erfindungsgemäßen Fördergurt zum Einsatz kommt, kann mehrlagig aufgebaut sein, ist vorzugsweise jedoch einlagig aufgebaut.

Vorzugsweise weist das textile Flächengebilde ein Flächengewicht von 100 bis 1000 g/m² auf, insbesondere ein Flächengewicht von 200 bis 800 g/m².

Die Breite des Fördergurtes richtet sich nach der gewünschten Anwendung. Vorzugsweise beträgt die Breite mehr als 4 cm, vorzugsweise mehr als 50 cm. Besonders bevorzugt sind Fördergurte, die eine Breite von nicht mehr als 5 m aufweisen. Ganz besonders bevorzugt ist eine Breite im Bereich von 50 cm bis 3 m.

Die Länge des Fördergurtes, beziehungsweise der Umfang wenn der Fördergurt endlos ist, ist vorzugsweise größer als 5 m. Insbesondere beträgt die Länge mehr als 20 m.

Vorzugsweise werden die Garne durch Weben, Stricken, Wirken, wie , beispielsweise Schußrascheln, oder Spiralisieren zu textilen Flächengebilden verarbeitet. Es ist möglich, daß in den textilen Flächengebilden neben Monofilamenten auch Multifilamentgarne oder Stapelfasergarne verarbeitet werden. Bevorzugt werden die textilen Flächengebilde aus Monofilamenten hergestellt.

Werden die textile Flächengebilde in Form von Spiraltüchern eingesetzt, können sowohl die Spiralen als auch die Steckdrähte aus elastischem Material bestehen. Vorzugsweise bestehen entweder nur die Spiralen oder nur die Steckdrähte aus elastischem Material. Besonders bevorzugt sind die Spiralen aus dem elastischeren Material und die Steckdrähte aus dem weniger elastischen Material hergestellt.

Besonders bevorzugt werden die eingesetzten Garne auf den heute üblichen Webmaschinen mit den auch beim Verweben von Polyethylenterephthalat üblichen Maschinenparametern zu den textilen Flächengebilden verwebt. Beispiele für geeignete Webmaschinen sind Projektilwebmaschinen oder Greiferwebmaschinen. Insbesondere werden die Garne auf herkömmlichen Breitwebmaschinen mit den auch beim Verweben von Polyethylenterephthalat üblichen Maschinenparametern zu den textilen Flächengebilden verwebt.

Werden die textilen Flächengebilde durch Weben hergestellt, sind alle an sich bekannten Bindungsarten möglich. Bevorzugt sind als Gewebetypen Atlasbindungen oder Körperbindungen.

Die Größe der Zwischenräume beziehungsweise maschenartigen Öffnungen im textilen Flächengebilde (Porengröße), durch die beispielsweise der Schmutz beim Öffnen dieser Zwischenräume gemäß dem Verfahren der Erfindung fallen kann, läßt sich mit Hilfe an sich bekannter Maßnahmen bei der Herstellung des textilen Flächengebildes, wie beispielsweise durch geeignete Wahl der Bindungsart, des Titers, des Flächengewichtes, usw. in weiten Grenzen einstellen. Auf diese Weise kann der Fördergurt an das jeweilige Einsatzgebiet angepaßt werden.

Die Fördergurte gemäß der Erfindung sind besonders beständig gegen die Einwirkung von UV-Licht, Chlor und alkalischen Medien.

Weiterhin weisen die Fördergurte eine besonders hohe Farbstoffaufnahme auf. Sie lassen sich daher besonders gut anfärben.

Vorzugsweise kann der erfindungsgemäße Fördergurt ganz aus textilen Flächengebilden auf Basis von Polyestern hergestellt werden. Dies ist besonders vorteilhaft, wenn neben einer guten Festigkeit auch auf Sortenreinheit (Recycling) geachtet werden muß.

Vorzugsweise kann das im erfindungsgemäßen Fördergurt eingesetzte textile Flächengebilde zusätzlich geglättet werden, um beispielsweise die Haftung des Fördergurtes den zu transportierenden Gütern oder den unerwünschten Bestandteilen, wie Lebensmittelrückstände, zu verringern oder die Rollreibung auf den zur Führung des Fördergurtes gegebenfalls vorandenen Galetten zu verringern. Eine Glättung kann beispielsweise durch einseitiges oder beidseitiges bügeln des textilen Flächengebildes mittels eines Kalanders erfolgen.

Unter dem Begriff "Monofil" wird in der vorliegenden Erfindung ein einzelne Endlosfaser bestimmter Dicke verstanden. Der Querschnitt kann beliebig sein; beispielsweise rund, oval, bzw. ellipsenförmig, bi- oder multilobal, bändchenförmig oder auch n-eckig sein. Bevorzugt sind runde Monofile.

Der Fördergurt gemäß der Erfindung kann gegebenfalls Nahtstellen enthalten, wenn aufgrund des verwendeten Verfahrens zur Herstellung des endlosen, Fördergurtes mehrere Teilstücke miteinander verbunden werden müssen. Werden die textilen Flächengebilde beispielsweise auf speziellen Rundwebmaschinen hergestellt, können die Fördergurte auch direkt in Form eines endlosen Bandes hergestellt werden.

Die Erfindung betrifft auch ein Verfahren zum Transportieren von Gütern mittels eines sich bewegenden Fördergurtes (5), welches dadurch gekennzeichnet ist, daß der Fördergurt über Führungselemente (2,3,9), wie beispielsweise Galetten, geführt wird und in einer Streck- oder Kompressions-Zone (1) mit Hilfe von Führungselementen (2,9) eine kontinuierliche Flächenveränderung erfährt.

Unter dem Begriff "kontinuierliche Flächenveränderung" wird im Rahmen dieser Beschreibung verstanden, daß der Fördergurt in Richtung der Förderrichtung und/oder in Richtung der Breite des Fördergurtes vergrößert und/oder verkleinert wird. Eine Vergrößerung der Fläche tritt beispielsweise dann ein, wenn der Fördergurt in der Streck- oder Kompressionszone (1) durch auf ihn wirkende Kräfte, die beispielsweise durch die Führungselemente (2,9) auf den Fördergurt übertragen werden können, auseinandergezogen wird. Eine Verkleinerung tritt ein, wenn der Fördergurt außerhalb der Zone vorgespannt ist, und innerhalb der Zone die Spannung geringer ist als außerhalb der Zone. Beispiele für Vorrichtungen zum Spannen und Transportieren des Fördergurtes sind Galettensysteme, Spannrahmen oder Greifer. Die Flächenveränderung des Fördergurtes erfolgt "kontinuierlich", da sich der Fördergurt mit einer bestimmten Geschwindigkeit fortbewegt und somit in kontinuierlicher Weise immer neue Teilstücke in die Streck- oder Kompressionszone gelangen.

Dabei kann die Lage des Fördergurtes in der Streck- oder Kompressions-Zone, vorzugsweise Reinigungszone im Prinzip beliebig sein. Beispielsweise kann der Fördergurt in dieser Zone zur Unterstützung der Ablösung der abzulösenden Bestandteile vom Band vertikal oder auch horizontal angeordnet sein. Wo es zweckmäßig ist, kann auch eine bestimmte Schräglage des Fördergurtes, zum Beispiel für die Abtrennung von Staub vom Fördergut, in der Zone von Vorteil sein. Wird das erfindungsgemäße Verfahren zum Trennen des Fördergutes von unerwünschten Bestandteilen eingesetzt, so darf die Schräglage nicht so groß gewählt werden, daß das zu transportierende Gut vom Fördergurt abfällt.

Vorzugsweise erfolgt die Flächenveränderung durch Strecken des Fördergurtes in Richtung parallel zur Bewegungsrichtung des Fördergurtes.

Vorzugsweise führt die die Flächenveränderung zur Reinigung des Fördergurtes von unerwünschte Bestandteilen (7), wie beispielsweise Staub, Schmutz, Partikel, Körper, Flüssigkeiten oder Beschichtungen, wobei die unerwünschten Bestandteile vom Fördergurt abgelöst werden oder deren Ablösung vom Fördergurt zumindest unterstützt wird. Dabei führt die aufgewendete Walkarbeit zu einer Verringerung der am Fördergurt anhaftenden Bestandteile. Wenn es gewünscht wird, können die abgelösten unerwünschten Bestandteile vorzugsweise auch mit Hilfe eines geeigneten Auffangbehälters (10) gesammelt werden und gebenenfalls rückgeführt werden.

Der Fördergurt weist vorzugsweise maschenartige Öffnungen auf, die bei der dynamischen Flächenveränderung sich so öffnen oder sich so vergrößern, daß zumindest ein Teil der unerwünschten Bestandteile sich vom Fördergurt ablöst und durch die Maschen hindurchfällt.

Die Reinigung beziehungsweise Ablösung der unerwünschten Bestandteile vom Fördergurt kann vorzugsweise durch die Zufuhr von Flüssigkeiten, wie Wasser, oder Gasen, wie Druckluft, unterstützt werden.

Wird die Reinigung des Fördergurtes durch Druckluft unterstützt, kann mit einem gleichförmigen Gasstrom oder aber auch mit einem gepulstem Gasstrom gearbeitet werden. Insbesondere bei gepulstem Gasstrom ergibt sich eine besonders effektive Ablösung der unerwünschten Bestandteile.

Ebenfalls bevorzugt ist es, die Reinigung des Fördergurtes durch Vibrationen, wie Rütteln des Fördergurtes, Schaben, Kämmen oder Bürsten zu unterstützten.

Weiterhin ist es bevorzugt, daß die Reinigung des Fördergurtes durch Verdrehen des Fördergurtes unterstützt wird.

In bestimmten Fällen kann es erforderlich sein, daß sich die maschenartigen Öffnungen im Fördergurt in Richtung der Breite nicht zusammenziehen oder zuminest ihre Größe in dieser Richtung beibehalten. Innerhalb der durch die Materialparameter des Fördergurtes vorgegebenen Dehnungsgrenzen kann der Fördergurt aber auch in Richtung der Breite etwas vergrößert werden, so daß sich die Öffnungen in diese Richtung vergrößern. Vorzugsweise wird die Reinigung des Fördergurtes durch Flächenveränderung der maschenartigen Öffnungen durch einen Spannrahmen, der die Maschen in Richtung senkrecht zur Transportrichtung des Fördergurtes vergrößert, verkleinert oder deren Größe beibehält, unterstützt.

Vorzugsweise hat der Fördergurt die Form eines Endlosbandes und läuft über Führungselelemente, wie beispielsweise Galetten, um.

Vorzugsweise kann das Verfahren gemäß der vorliegenden Erfindung auch mit anderen an sich bekannten Verfahrensschritten, wie Trocknung, Erhitzung, Kühlung, Beschichtung, Bestäubung oder Beaufschlagung, kombiniert werden.

Die vorliegende Erfindung betrifft auch die Verwendung des weiter oben beschriebenen Fördergurtes in Transportsystemen, vorzugsweise in Förderbändern in der Lebensmittelindustrie, im Bergbau, bei der Tierfütterung oder in der Farbenindustrie.

Werden die erfindungsgemäßen Fördergurte für die Lebensmittelindustrie eingesetzt, können diese so hergestellt werden, daß sie gemäß den Anforderungen des Lebensmittelgesetzes praktisch keine Chemikalien an die Lebensmittel abgegeben. Vorzugsweise weisen die Fördergurte neben den textilen Flächengebilde daher keine zusätzlichen Beschichtungen auf.

Ein weiterer Gegenstand der Erfindung ist eine Transportvorrichtung umfassend
- einen Fördergurt (5),
- mindestens zwei Führungselemente einer ersten Sorte (2,9), wie beispielsweise Galetten oder Walzen, über die sich der Fördergurt bewegt,
- gegebenenfalls weitere Führungselemente einer zweiten Sorte (3), über die der Fördergurt ebenfalls verläuft und die den Fördergurt gegebenfalls zusätzlich antreiben können, wobei die Führungselemente der ersten Sorte mit jeweils unterschiedlicher Geschwindigkeit betrieben werden können, so daß sich der über diese Führungseelemente bewegende Fördergurt in der Zone (1), die sich zwischen den Führungselementen der ersten Sorte befindet, ausdehnt und/oder komprimiert.

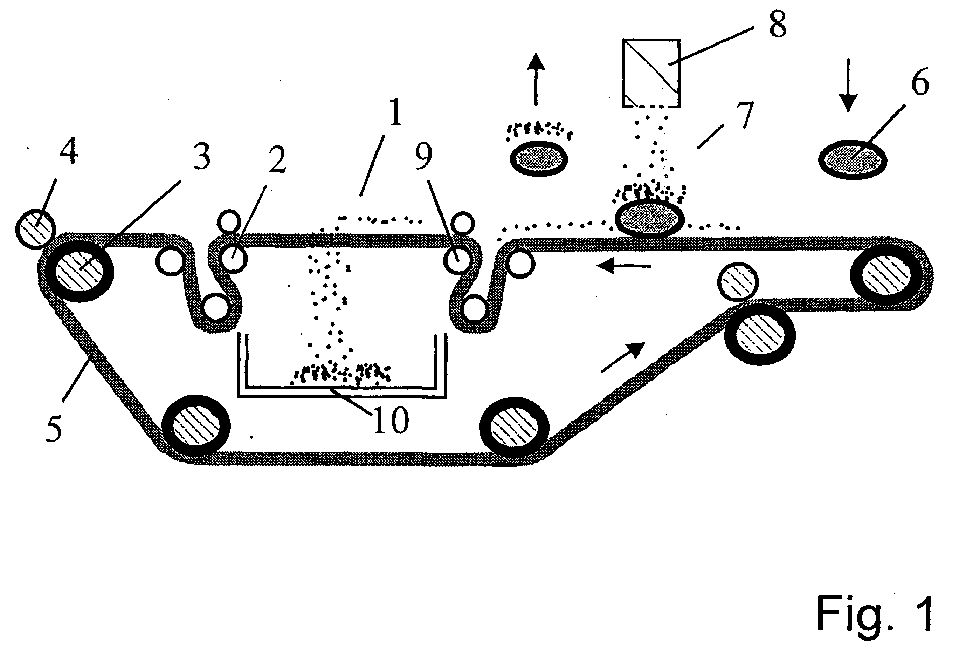

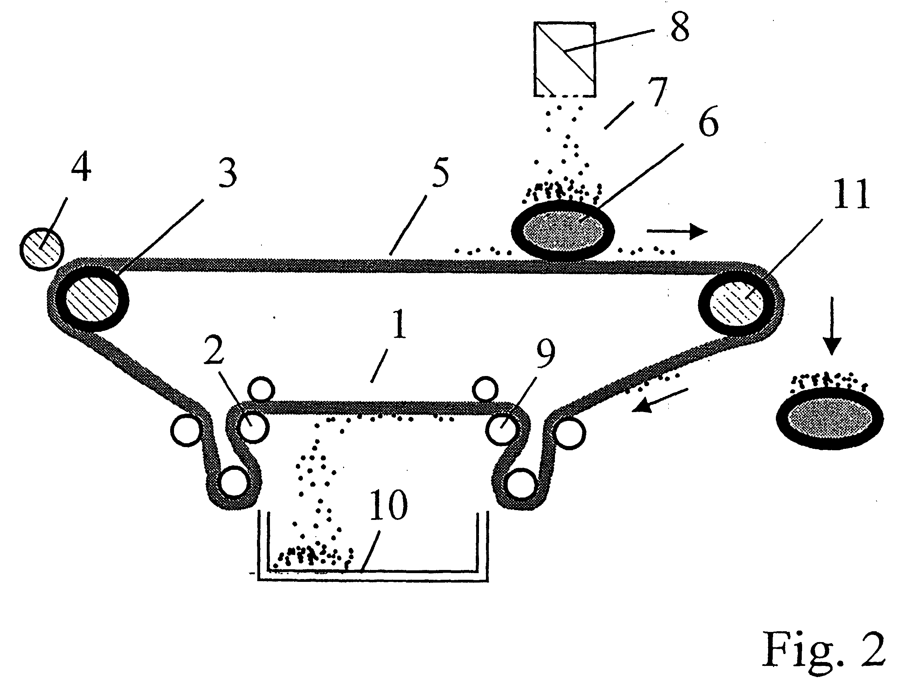

Beipiele für erfindungsgemäße Transporvorrichtungen zeigen die Figuren 1 und 2.

Figur 1 zeigt, wie mit Hilfe des erfindungsgemäßen Verfahrens Lebensmittel (6), wie beispielsweise Brötchen oder Kreppl (Berliner) mit beispielsweise Puderzucker oder Mehl (7) beaufschlagt werden können. Die Lebensmittel werden vor der Beaufschlagung auf den Fördergurt (5) verbracht und danach wieder entfernt. Der Fördergurt bewegt sich dabei ständig über Walzen (3) und Galetten (2,9) und wird gegebenfalls mit Hilfe von Andruckwalzen (4) auf den Walzen (3) fixiert. Mittels einer Appliziereinrichtung (8) wird der Puderzucker oder das Mehl auf die Lebensmittel (6) gestreut. Dabei kommt es zu einer Verschmutzung des Fördergurtes. Innerhalb der durch die Galettensysteme (2) und (9) gebildeten Zone wird der Fördergurt gedehnt, so daß sich die Schmutzpartikel vom Fördergurt lösen und durch die Öffnungen des Fördergurtes hindurchfallen. Die gelösten Schmutzpartikel können in einem Auffangbehälter (10) gesammelt werden.

Figur 2 zeigt ebenfalls ein Förderband für Lebensmittel. Im Gegensatz zu Figur 1 werden die beaufschlagten Lebensmittel bis zur rechts angeordneten Rolle (11) weitertransportiert, bis sie vom Fördergurt herunterfallen. Hierbei bleiben die Schmutzpartikel zumindest teilweise am Fördergurt haften. Innerhalb der durch die Galettenysteme (2) und (9) gebildeten Zone wird die Ablösung durch die Dehnung des Fördergurtes unterstützt, so daß diese von der Unterseite des Fördergurtes abfallen.

### Beispiele zur Herstellung des Fördergurtes:

Untersucht wurden folgende Monofilamente hinsichtlich ihrer Eignung als elastisches Garn in den erfindungsgemäßen Transportbändern:
- ® ELAS-TER der Fa. Hoechst Trevira GmbH & Co KG (thermoplastischer Copolyether-ester, erfindungsgemäß),
- PA 6 (® Perlon, Polyamid, Vergleich),
- ® Trevira 936B (PBT-Monofil, Vergleich) und
- ® Trevira 900S (PET-Monofil, Vergleich)

Die Ergebnisse der Messungen der technischen Daten dieser Monofilamente sind in Tabelle 1 dargestellt.

Aus den aufgelisteten Monofilamenten wurden durch Verweben auf einer Breitwebmaschine ein Gewebe hergestellt. Dabei wurden Monofile unterschiedlichen Durchmessers verarbeitet. In der Kette kamen elastische Monofile des Typs ®ELAS-TER mit 0,17 mm Durchmesser zum Einsatz. In den Oberschüssen wurden nicht elastische Monofile des Typs ®Trevira 900S mit einem Durchmesser von 0,2 mm und in den Unterschüssen Monofile gleichen Typs und gleichen Durchmessers eingesetzt. Anschließend wurde das erhaltene Gewebe auf einer entsprechend dimensionierten Thermofixiereinrichtung zur Glättung nachbehandelt um die im Einzelfall erwünschten spezifischen Porengrößen bzw. Öffnungen im Gewebe einzustellen und zu einem endlosen Fördergurt verarbeitet.

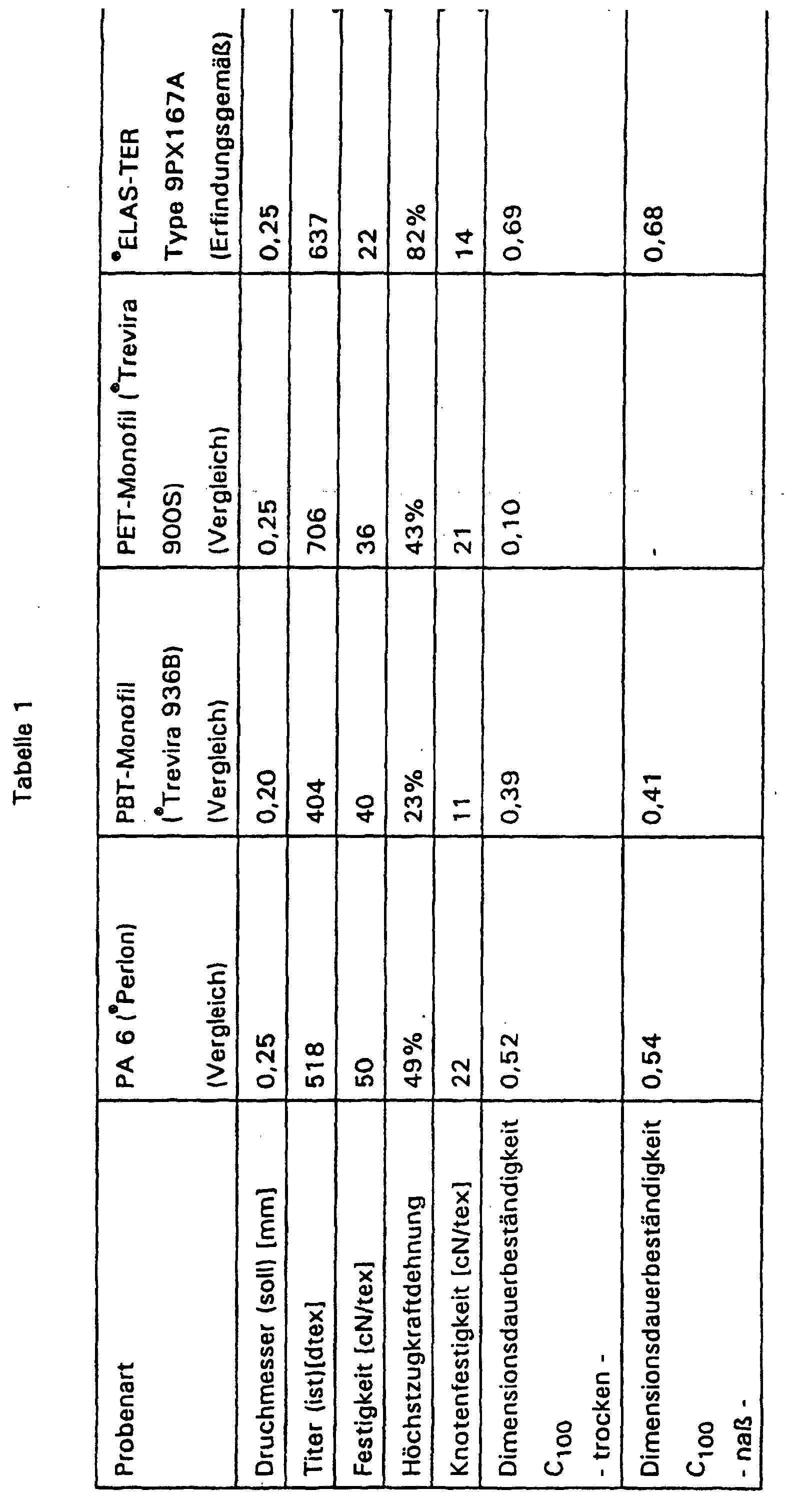

## Patentansprüche

1. Fördergurt (5) für Transportbänder enthaltend ein textiles Flächengebilde auf Basis von überwiegend synthetischen Garnen, **dadurch gekennzeichnet, daß** der Fördergurt die Form eines endlosen Bandes hat und die in Richtung der Laufrichtung des Fördergurtes verlaufenden Garne elastisch sind, wobei die elastischen Garne eine Höchstzugkraftdehnung von mindestens 60 % aufweisen und zu mindestens zu 70 Gew.-%, bezogen auf das Gesamtgewicht des Garns, aus einem thermoplastischen, elastomeren Copolyether-esters bestehen, der die wiederkehrenden Struktureinheiten der Formeln I und II
-O-OC-Ar²-CO-O-R⁴- (I),
und
-O-OC-Ar³-CO-O-R⁵- (II)
enthält, worin
Ar² und Ar³ unabhängig voneinander zweiwertige aromatische Reste darstellen,
R⁴ einen zweiwertigen aliphatischen oder cycloaliphatischen Rest darstellt, und
R⁵ den zweiwertigen Rest eines Polyalkylenethers bedeutet.

2. Fördergurt nach Anspruch 1, **dadurch gekennzeichnet, daß** die senkrecht zur Laufrichtung des Fördergurtes verlaufenden Garne nicht elastische synthetische Garne auf Basis von nicht elastomeren Polyestern, Polyamiden oder Polyolefinen sind, die eine Höchstzugkraftdehnung von weniger als 60% aufweisen.

3. Fördergurt nach einem der Ansprüche 1 oder 2, **dadurch gekennzeichnet, daß** der Fördergurt unbeschichtet ist.

4. Fördergurt nach mindestens einem der Ansprüche 1 bis 3, **dadurch gekennzeichnet, daß** die Garne Monofilamente sind.

5. Fördergurt nach mindestens einem der Ansprüche 1 bis 4, **dadurch gekennzeichnet, daß** die Dimensionsdauerbeständigkeit, ausgedrückt durch die Zugbeanspruchungskennzahl C₁₀₀ der Garne nach dem 100. Dehnungsspiel, größer ist als 0,60, vorzugsweise größer als 0,65, wobei C₁₀₀ bestimmt ist nach dem Hysteresezugversuch nach DIN 53835 Teil 2 mit einem Dehnungsspiel zwischen 5 und 10%, einer Vorspannkraft von 0,25 cN/tex, einer freien Einspannlänge von 500 mm und einer Klemmengeschwindigkeit von 500 mm/min.

6. Verwendung des Fördergurtes gemäß den Ansprüchen 1 bis 5 in Transportsystemen, vorzugsweise in Förderbändern in der Lebensmittelindustrie, im Bergbau, bei der Tierfütterung oder in der Farbenindustrie.

7. Verfahren zum Transportieren von Gütern mittels eines sich bewegenden Fördergurtes (5), **dadurch gekennzeichnet, daß** der Fördergurt über Führungselemente (2,3,9), wie beispielsweise Galetten, geführt wird und in einer Streck- oder Kompressions-Zone (1) mit Hilfe von Führungselementen (2,9) eine kontinuierliche Flächenveränderung erfährt.

8. Verfahren gemäß Anspruch 7, **dadurch gekennzeichnet, daß** die Flächenveränderung durch Strecken des Fördergurtes in Richtung parallel zur Bewegungsrichtung des Fördergurtes erfolgt.

9. Verfahren gemäß Anspruch 7 oder 8, **dadurch gekennzeichnet, daß** die Flächenveränderung zur Reinigung des Fördergurtes von unerwünschte Bestandteilen (7), wie beispielsweise Staub, Schmutz, Partikel, Körper, Flüssigkeiten oder Beschichtungen, führt, wobei die unerwünschten Bestandteile vom Fördergurt abgelöst werden oder zumindest die Ablösung der Bestandteile unterstützt wird.

10. Verfahren gemäß mindestens einem der Ansprüche 7 bis 9, **dadurch gekennzeichnet, daß** der Fördergurt maschenartige Öffnungen aufweist, die bei der dynamischen Flächenveränderung sich so öffnen oder sich so vergrößern, daß zumindest ein Teil der unerwünschten Bestandteile sich vom Fördergurt ablöst und durch die Maschen hindurchfällt.

11. Transportvorrichtung umfassend
- einen Fördergurt (5),
- mindestens zwei Führungselemente einer ersten Sorte (2,9), wie beispielsweise Galetten oder Walzen, über die sich der Fördergurt bewegt,
- gegebenenfalls weitere Führungselemente einer zweiten Sorte (3), über die der Fördergurt ebenfalls verläuft und die den Fördergurt gegebenfalls zusätzlich antreiben können,
wobei die Führungselemente der ersten Sorte mit jeweils unterschiedlicher Geschwindigkeit betrieben werden können, so daß sich der über diese Führungseelemente bewegende Fördergurt in der Zone (1), die sich zwischen den Führungselementen der ersten Sorte befindet, ausdehnt und/oder komprimiert.

## Claims

1. A belt (5) for conveyor belts containing a flat textile structure based on predominantly synthetic yarns, **characterised in that** the belt takes the form of an endless belt and the yarns extending in the direction of movement of the belt are elastic, the elastic yarns having a maximum tensile force elongation of at least 60% and consisting of at least 70% by weight in relation to the total weight of the yarn, of a thermoplastic elastomer copolyether ester which contains the recurrent structural units of formulae I and II
-O-OC-Ar²-CO-O-R⁴- (I),
and
-O-OC-Ar³-CO-O-R⁵- (II)
in which
Ar² and Ar³, independently of each other, represent bivalent aromatic radicals,
R⁴ represents a bivalent aliphatic or cycloaliphatic radical, and
R⁵ denotes the bivalent radical of a polyalkylene ether.

2. A belt according to claim 1, **characterised in that** the yarns extending at right-angles to the direction of movement of the conveyor belt are not elastic synthetic yarns based on non-elastomeric polyesters, polyamides or polyolefins, which have a maximum tensile force elongation of less than 60%.

3. A belt according to one of claims 1 or 2, **characterised in that** the conveyor belt is uncoated.

4. A belt according to at least one of claims 1 to 3, **characterised in that** the yarns are monofilaments.

5. A belt according to at least one of claims 1 to 4, **characterised in that** the permanent dimensional stability expressed by the tensile loading characteristic C₁₀₀ of the yarns after the 100th elongation cycle, is greater than 0.60, preferably greater than 0.65, whereby C₁₀₀ is determined by the hysteresis tensile test to DIN 53835 Part 2 with an elongation cycle between 5 and 10%, an initial tension of 0.25 cN/tex, a free clamping length of 500 mm and a clamping rate of 500 mm/min.

6. Use of the belt according to claims 1 to 5 in conveyor systems, preferably in conveyor belts in the foodstuffs industry, in mining, in animal feeding and in the dyestuffs industry.

7. A method of transporting goods by means of a moving belt (5), **characterised in that** the belt is guided over guide elements (2, 3, 9) such as for example rollers, and undergoes a continuous surface change in a stretching or compression zone (1) by means of guide elements (2, 9).

8. A method according to claim 7, **characterised in that** the surface change takes place by stretching the belt in a direction parallel with the direction of movement of the belt.

9. A method according to claim 7 or 8, **characterised in that** the surface change results in the belt being cleaned of undesired constituents (7), such as for example dust, dirt, particles, bodies, liquids or coatings, the undesired constituents being detached from the belt or **in that** separation of the constituents is at least assisted.

10. A method according to at least one of claims 7 to 9, **characterised in that** the belt has mesh-like apertures which open during the dynamic surface change and become enlarged so that at least a part of the undesired constituents can fall through the mesh and become separated from the belt.

11. A conveyor system comprising
- a conveyor belt (5)
- at least two guide elements of a first kind (2, 9), such as for example rollers or cylinders over which the conveyor belt moves,
- possibly further guide elements of a second type (3), over which the conveyor belt likewise moves and which may possibly additionally be able to drive the conveyor belt,
whereby the guide elements of the first type can be operated in each case at a different speed so that in the zone (1) which is located between the guide elements of the first type, the conveyor belt moving over these guide elements becomes stretched and/or compressed.

## Revendications

1. Courroie (5) pour des bandes transporteuses contenant un produit plat textile à base de fils principalement synthétiques, **caractérisée en ce que** la courroie possède la forme d'une bande sans fin et les fils s'étendant dans la direction de défilement de la courroie sont élastiques, les fils élastiques présentant un allongement à la contrainte maximale de tension d'au moins 60 % et sont constitués, au moins jusqu'à concurrence de 70 % en poids, rapporté au poids total du fil, par un copolyéther-ester élastomère thermoplastique qui contient les unités de structure récurrentes répondant aux formules I et II
-O-OC-Ar²-CO-O-R⁴- (I),
et
-O-OC-Ar³-CO-O-R⁵- (I)
dans lesquelles
Ar² et Ar³ représentent, indépendamment l'un de l'autre, des radicaux aromatiques bivalents,
R⁴ représente un radical aliphatique ou cycloaliphatique bivalent, et
R⁵ représente le radical bivalent d'un polyalkylèneéther.

2. Courroie selon la revendication 1, **caractérisée en ce que** les fils s'étendant perpendiculairement à la direction de défilement de la courroie sont des fils synthétiques non élastiques à base de polyesters, de polyamides ou de polyoléfines non élastomères, qui présentent un allongement à la contrainte maximale de tension inférieur à 60 %.

3. Courroie selon l'une quelconque des revendications 1 ou 2, **caractérisée en ce que** la courroie est non enduite.

4. Courroie selon au moins une des revendications 1 à 3, **caractérisée en ce que** les fils sont des monofilaments.

5. Courroie selon au moins une des revendications 1 à 4, **caractérisée en ce que** la stabilité dimensionnelle à long terme, exprimée par l'indice de contrainte de traction C₁₀₀ des fils après le 100ième cycle d'allongement, est supérieure à 0,60, de préférence supérieure à 0,65, la valeur C₁₀₀ étant déterminée conformément à l'essai de traction par hystérésis selon la norme DIN 53835 partie 2, avec un jeu d'allongement entre 5 et 10 %, une force de précontrainte de 0,25 cN/tex, une longueur libre entre les mâchoires de 500 mm et une vitesse de déplacement des mâchoires de 500 mm/min.

6. Utilisation de la courroie selon les revendications 1 à 5 dans des systèmes de transport, de préférence dans des bandes transporteuses dans l'industrie alimentaire, dans l'industrie minière, dans le domaine de l'alimentation des animaux ou encore dans l'industrie des laques, des vernis ou des peintures.

7. Procédé pour le transport de marchandises à l'aide d'une courroie mobile (5), **caractérisé en ce que** la courroie est guidée par-dessus des éléments de guidage (2, 3, 9) tels que par exemple des galets, et est soumise à une variation de surface en continu, dans une zone d'étirage ou de compression (1) à l'aide d'éléments de guidage (2, 9).

8. Procédé selon la revendication 7, **caractérisé en ce que** la variation de surface a lieu par étirage de la courroie dans une direction parallèle à la direction de déplacement de la courroie.

9. Procédé selon la revendication 7 ou 8, **caractérisé en ce que** la variation de surface donne lieu à un nettoyage de la courroie vis-à-vis de constituants non désirés (7) tels que par exemple la poussière, la saleté, des particules, des corps étrangers, des liquides ou des enductions, les constituants non désirés étant détachés de la courroie ou, au minimum, le détachement des constituants étant facilité.

10. Procédé selon au moins une des revendications 7 à 9, **caractérisé en ce que** la courroie présente des ouvertures en forme de mailles qui, lors de la variation dynamique de la surface, s'ouvrent ou s'agrandissent de telle sorte qu'au moins une partie des constituants non désirés se détachent de la courroie et tombent à travers les mailles.

11. Dispositif de transport comprenant
- une courroie (5),
- au moins deux éléments de guidage d'un premier type (2, 9) tels que par exemple des galets ou des rouleaux par-dessus lesquels la courroie se déplace,
- le cas échéant, des éléments de guidage supplémentaires d'un deuxième type (3) par-dessus lesquels la courroie se déplace également et qui sont en mesure le cas échéant d'entraîner en outre la courroie,
dans lequel les éléments de guidage du premier type peuvent être entraînés avec une vitesse respectivement différente, si bien que la courroie qui se déplace par-dessus ces éléments de guidage est soumise, dans la zone (1) qui est disposée entre les éléments de guidage du premier type, à un allongement et/ou à une compression.
